# EUROPEAN PATENT SPECIFICATION

(11) **EP 2 103 923 B1**
(45) Date of publication and mention of the grant of the patent: **29.08.2018**
(21) Application number: 09002143.7
(22) Date of filing: 16.02.2009
(51) Int. Cl.: G01N 21/27, G01N 21/76

(54) **Automatic analyzer and analysis system using photomultiplier tube**
Automatisches Analysegerät und Analysesystem mit Photovervielfacherrohr
Analyseur automatique et système d'analyse utilisant un tube photomultiplicateur

(30) Priority: 17.03.2008 JP 2008066951
(43) Date of publication of application: 23.09.2009
(73) Proprietor: Hitachi High-Technologies Corporation, Tokyo 105-8717 (JP)
(72) Inventor: Sakazume, Taku, Hitachinaka-shi Ibaraki 312-8504 (JP); Suzuki, Kantaro, Hitachinaka-shi Ibaraki 312-8504 (JP)
(74) Representative: Strehl Schübel-Hopf & Partner

(56) References cited:
- JP-A- 2001 041 891
- US-A- 5 624 846
- US-B1- 6 190 617
- US-B2- 6 897 954

## Description

### BACKGROUND OF THE INVENTION

### 1. Field of the Invention

The present invention relates to an automatic analyzer which performs qualitative and quantitative analysis of chemical constituents based on changes in optical characteristics and, in particular, to such automatic analyzer and analysis systems which use photomultiplier tubes as detectors.

### 2. Description of the Related Art

The heterogeneous immunoassay exists as a method for assaying hormones and other chemical constituents contained in very small quantities in blood and the like. In this method, a luminescent reaction, such as a chemiluminescence as described in JP-A-2003-50204 or an enzyme-based electrochemiluminescence as described in JP-A-11-507726, is detected by a photomultiplier tube. A calibration technique for a photomultiplier tube is disclosed in JP-A-59-125043. In this technique, a spectrophotometer has a plurality of calibration curves associated with a plurality of detection sensitivities of a photomultiplier tube. Further, a signal processing technique for a photomultiplier tube-used detection system in a chemiluminescent method as mentioned above is disclosed in JP-A-2007-85804.

As clinical examination, concentrations of chemical substances contained in blood, urine and other body fluids, such as proteins, lipids, sugar, ions and their constituents, are quantitatively measured. The clinical examination apparatus includes an automatic analyzer where preparation of an aliquot of a body fluid or other liquid sample; mixture of the aliquot with a reagent; and measurement of the change of a substance contained in the reagent as a result of reaction with the reagent are performed. Such an automatic analyzer is configured so that the processes required for analysis, including mixture of a sample with a reagent and reaction at a constant temperature, are successively performed at given times. Many of these automatic analyzer use optical sensors as the final detecting means. For example, the spectrophotometric method illuminates a reaction solution contained in a transparent vessel with light and detects how the light is attenuated by the reaction solution. In this case, a halogen lamp or xenon lamp is conventionally used as the light source while a photodiode is commonly used in the detector. The detector incorporates a diffraction grating-used spectrometer, optical filter and light-guiding fiber optics. For still higher sensitivity analysis, the chemiluminescent method exists. In this case, the intensity of luminescence which is obtained by chemical reaction depending on the amount of the target analyte is detected by such a device as a photomultiplier tube.

In designing a detection system, the degree of the signal change obtainable by chemical reaction and the geometry, such as the optical path length, of the reaction vessel are considered. There is a general tendency toward the use of smaller reaction vessels and the detection of smaller amounts.

In designing a measurement system, it is necessary to cover the resolution and measurement range required for clinical examination. The resolution is determined separately for the normal range and each of the abnormal ranges associated with assumed illnesses. In the case of health examination, the primary diagnosis is to judge whether the concentration is within the normal range. If not within the normal range, a treatment is selected according to the cause of the illness deduced from the range within which the concentration falls.

Generally, blood electrolytes, such as sodium, potassium and chlorine ions, have high molar concentrations kept normally within very narrow ranges. For example, the normal concentration range of sodium is considered to be 135 to 149 mEq/l or as narrow as minus 5% to plus 5%. Likewise, the normal concentration of serum proteins is considered to be 6.3 to 7.8 g/dl or minus 10% to plus 10%. This is because since these substances play roles in regulating the serum osmotic pressure, biological activities themselves cannot be sustained if these concentrations greatly deviate. In this case, concentration data from a population has a single-peaked distribution such as a linear/logarithmic normal distribution and the sensitivity is determined depending on the maximum deviation from the mean value to be covered by measurement. In terms of mean value and standard deviation, the detection sensitivity and the reagent concentration are determined so as to cover the range of, for example, the mean value minus 5SD to the mean value plus 5SD by measurement.

In the case of extremely low concentration substances such as hormones, their concentrations do not greatly affect the homeostasis and may vary remarkably widely. For example, thyroid stimulating hormone in blood is detected by high sensitivity immunoreaction-used analysis. In this case, it is necessary to be able to measure concentrations over the 100000 times range of 0.001 µIU/ml to 100 µIU/ml. Further, specific resolutions are required respectively for the extremely low, normal and high ranges of concentration since the data obtained in each concentration range has a different purpose. For such an analyte, more than one reagents differing in sensitivity are used as the case may be although the same substance is measured. However, it is not economically allowed to provide more than one dedicated reagents for an analyte which is not so frequently targeted for measurement. It is therefore usual to substantially increase the detection sensitivities by setting the detector and reagent for high sensitivity and, in the case of high concentration, diluting the sample by several to several hundred times. However, in the case of an extremely low concentration substance which has reached a state of concentration equilibrium in the presence of other serum constituents, if dilution is done with saline, the signal quantity may not change in accordance with the dilution rate. In such a case, a BSA (bovine serum albumin)-contained solution may have to be used for dilution.

To solve the above mentioned problem, it is necessary to substantially widen the sensitivity of the detector side. JP 2001 041891 A discloses an automatic analyzer with the features in the preamble of claim 1. Other conventional analyzers are described in US 6,190,617 B2 and US 5,624,846 A.

### SUMMARY OF THE INVENTION

Generally, such high sensitivity analysis uses a photomultiplier, a kind of vacuum tube. Inside the vacuum tube, a high voltage of about 1000V is applied between the cathode and the anode. By using this potential difference, light incident on the cathode surface of the photomultiplier tube is multiplied by several thousand to several ten thousand times. Finally, the multiplied light is converted into a current or voltage. This photomultiplier tube is subject to noise due to thermal electrons when the incident light intensity is low whereas it may cause saturation, making unstable the output when the incident light intensity is high. Accordingly, the concentration of the measuring reagent must be determined so that the lowest signal quantity will become higher than the quantity below which noise due to thermal electrons has influence and the highest signal quantity will become lower than the quantity beyond which saturation occurs. In particular, saturation poses a problem of lowered repeatability. It is an object of the present invention to provide an automatic analyzer and analysis system capable of obtaining stable measurement results for different analytes even if targets to be measured are different.

To attain the above mentioned object, the present invention provides an automatic analyzer as defined in claim 1. The subclaims relate to preferred ambodiments. In an example of the disclosure, a detector used for detection has a function to adjust the sensitivity thereof in advance, an optimum sensitivity is selected for each of plural measurement items according to the requested concentration range and the concentration is calculated based on the calibration curve or correction formula prepared for the sensitivity range which encompasses the selected sensitivity. Background measurement and signal measurement may be performed with two or more sensitivities for each item. In this case, the signal obtained with the most appropriate sensitivity may be selected.

By using the same measurement system and measuring reagent, it is possible to measure a wider range of concentration with better repeatability and higher reliability.

### BRIEF DESCRIPTION OF THE DRAWINGS

Fig. 1 is a block diagram of a detection system having a photomultiplier tube.
Fig. 2 shows a plurality of concentration vs. output signal calibration curves for respective different sensitivities.
Fig. 3 is an illustration for describing how a detection sensitivity is selected for a requested measurement.
Fig. 4 shows a photomultiplier tube-used detecting division in a chemiluminescent method.
Fig. 5 shows an automatic sensitivity control method for flat luminescence.
Fig. 6 shows an automatic sensitivity control method for spiky luminescence.

### DESCRIPTION OF THE PREFERRED EMBODIMENTS

Embodiments of the present invention will be described below with reference to the drawings.

### [Embodiment 1]

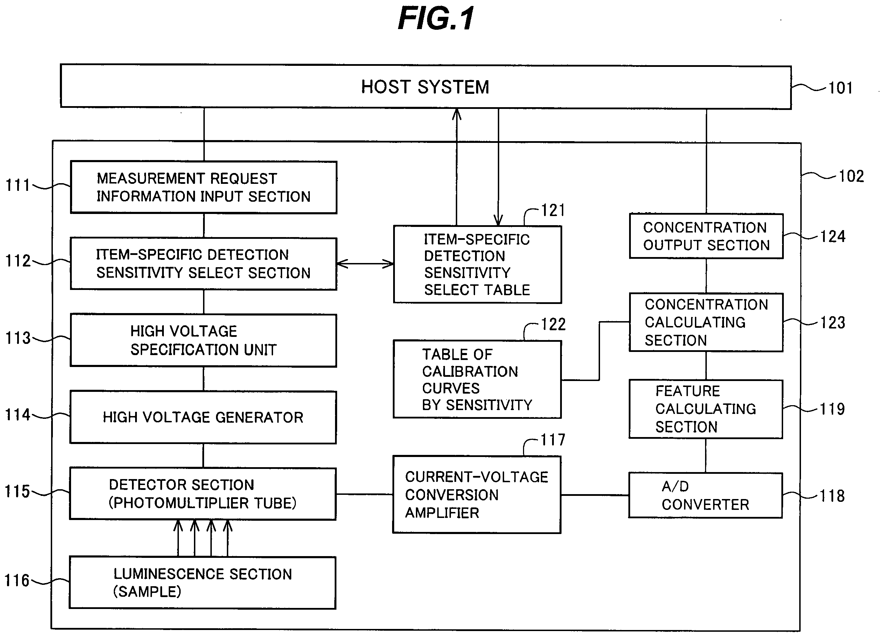

First, Fig. 1 shows an embodiment of a detection system which employs a photomultiplier tube as a detector. In the present embodiment, for example, thyroid stimulating hormone (TSH) is given three concentration ranges: (1) extremely low concentration range due to illness, (2) normal concentration range, and (3) high concentration range due to illness.

Fig. 1 illustrates the configuration of the analysis system. In the analysis system, request information, from a host system 101 governing an analysis part 102, is accepted at a measurement request information input section 111. It is assumed that plural measurement items are requested for each sample. By an item-specific detection sensitivity select section 112, an item-specific detection sensitivity is selected for the current item of the current sample according to an item-specific detection sensitivity select table 121. In this case, it is also possible to construct a logic to access the host system 101 and determine a detection sensitivity according to a concentration range predictable from the range of past measured data, past other item data, probable diseases and others. According to the thus obtained detection sensitivity, a sensitivity-determining high voltage specification unit 113 specifies a specific voltage to a high voltage generator 114. According to the specified voltage, the high voltage generator 114 applies a high voltage approximately in the 1000V range to a photomultiplier tube which constitutes a detector section 115. The high voltage is, for example, 600V to 1100V. Accordingly, light is emitted depending on the concentration of the analyte in the sample which was prepared and reacted in association with the measurement request information input section 111. For example, light emission may be caused by such a chemiluminescent method as described in JP-A-2003-50204. The emitted light is converted to a current and output to a current-voltage conversion amplifier 117. A voltage signal obtained through conversion by the current-voltage conversion amplifier 117 is converted to a digital signal by an analog digital (A/D) converter 118. From the digital signal, a feature is calculated by a feature calculating section 119. For example, the feature is calculated by such an integration method as disclosed in JP-A-2007-85804. The calculated feature is converted to a concentration by a sensitivity-specific calibration curve table 122 prepared in advance and reported to the host system 101 by a concentration output section 124.

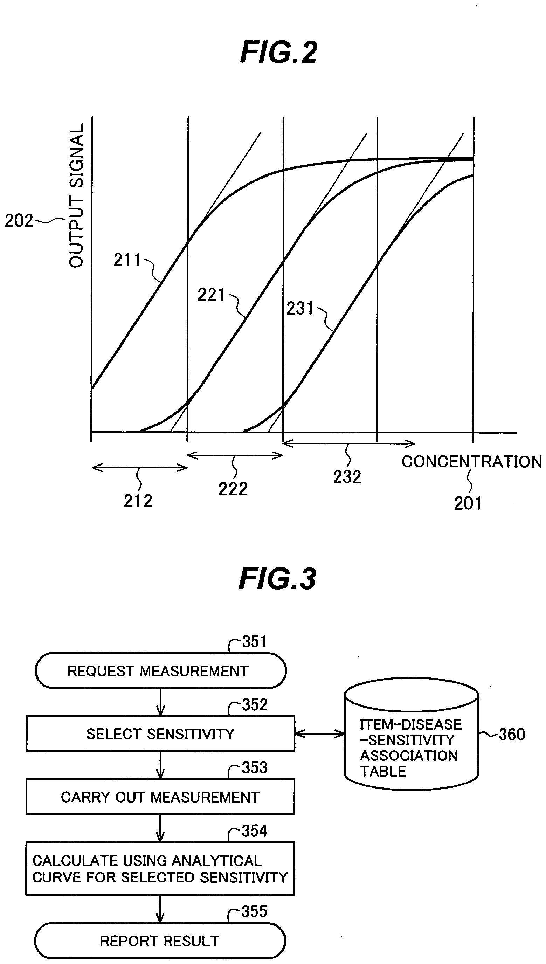

With reference to Fig. 2, the following provides a detailed description of the relation between the sensitivity and the feature. For a given measurement item, the horizontal axis represents the concentration 201 while the vertical axis represents the output signal 202 as a feature. Here, three calibration curves or relations between the concentration 201 and the output signal 202 respectively at three different detection sensitivities are denoted as high sensitivity mode 211, intermediate sensitivity mode 221, and low sensitivity mode 231. For example, if the lower and upper limits of the voltage applied to the photomultiplier tube are 600V and 1100V, 1000V is applied in the high sensitivity mode 211, 850V is applied in the intermediate mode 221, and 700V is applied in the low sensitivity mode 231. By considering a range of ±100V as the individual specificity of each photomultiplier tube, a margin of 100V is left to each of the upper and lower limits in order to absorb the specificity. If thyroid stimulating hormone (TSH) must be measured at high sensitivity, the condition is set so as to follow the analytical curve of the high sensitivity mode 211. To check if the concentration is within the normal range, the intermediate mode 221 is used. Further, in the case of a disease associated with high concentration, the low sensitivity mode 231 is used. In the embodiment, with priority given to linearity, only the linear part of each sensitivity mode is used. Generally, a photomultiplier tube has such a tendency that due to noise, the output signal is somewhat higher than expected linearly when the intensity of light is low and, due to saturation, the output signal is somewhat lower than expected linearly and poor in reproducibility when the intensity of light is high. By using the central linear part of each sensitivity mode, it is possible to secure good linearity and facilitate conversion to a concentration and its correction.

The following describes the concept of items and detection sensitivities in the item-specific detection sensitivity select table 121 of Fig. 1. Fig. 3 shows an analysis flow. For an analysis, after a sample is taken, a test item is registered to the system for measurement at 351. Then, a sensitivity is selected at 352. By the item-disease-sensitivity association table 360 which is a collection of predefined rules, the sensitivity may be selected automatically according to such information as the condition of the sample, underlying disease inferred from a diagnostic interview, medical history and past measured values. Then, at 353, measurement is performed and a signal quantity or a feature calculated from the signal is obtained. In the present specification, information obtained by physical measurement is called a feature. By using an analytical curve corresponding to the feature obtained at 354 and the sensitivity selected to obtain this feature, a concentration is calculated and reported as the concentration of the analyte in the sample at 355.

### [Embodiment 2]

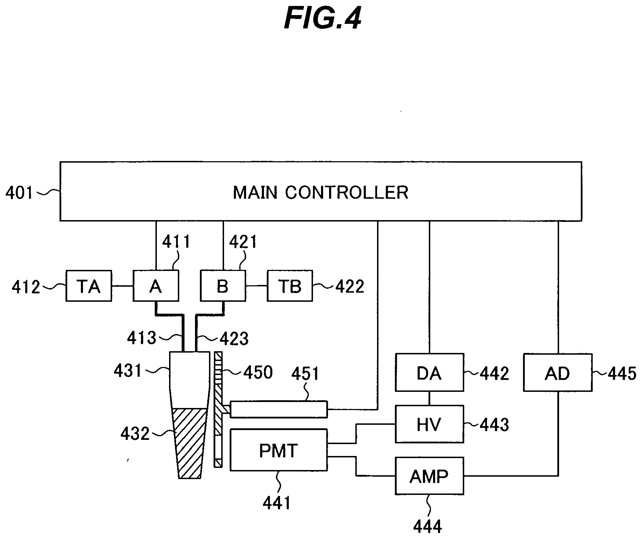

The following describes how the concentration measurement range is adjusted for a single measurement. First, Fig. 4 shows the detecting division of a system to perform this measurement. A main controller indicated at 401 controls the detector section. A reaction vessel 431 is a vessel for causing chemiluminescence therein. A luminescent substance, combined with magnetic particles is contained in this vessel. A corresponding chemiluminescent method is disclosed in JP-A-2007-85804. A pump A 411 adds a liquid from a reagent tank TA 412 to the luminescent substance through a nozzle 413. Then, a pump B 421 adds a liquid from a tank TB 422 through a nozzle 423. Due to chemical reaction with these added liquids, a light emitting part 432 emits light. This light is detected by a photomultiplier tube 441. The light to be incident on the photomultiplier tube may be filtrated by a filter 450. Choosing from a plurality of displaceable filters may also be realized. The photomultiplier tube 441 follows a digital sensitivity specification given by the main controller 401. By a converter 442, this sensitivity specification is converted to an analog voltage input to a high voltage generator 443 to adjust the sensitivity of the photomultiplier tube 441. A faint current signal obtained from the photomultiplier tube is converted to a voltage signal by a logarithmic amplifier 444 and further sent by an analog-digital converter 445 to the main controller 401 as a signal quantity for a predetermined unit of time.

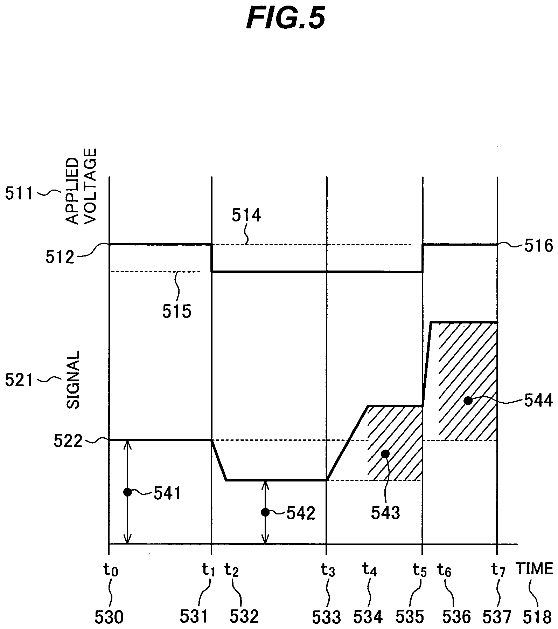

Fig. 5 illustrates how data are processed time-sequentially. An applied voltage 511 to the photomultiplier tube, which indicates a sensitivity of the photomultiplier tube is indicated by the reference numeral 512 time-sequentially along the same time axis 518. And a signal obtained from the photomultiplier tube is plotted with the reference numeral 522 time-sequentially along the same time axis 518. Shown in this figure is from timing (t0) 530 at which background measurement is started to timing (t7) 537 at which data acquisition for feature calculation is completed. First, background measurement is done from timing (t0) 530 until timing (t1) 531 to obtain an average value 541. During this period, the applied voltage 512 is at the high sensitivity side 514. Then, at timing (t1) 531, the voltage applied to the photomultiplier tube is set to the low sensitivity side 515. After settled, the second background 542 is obtained from timing (t2) 532. Then, at timing (t3) 533, a reagent is injected from the nozzle 423 to initiate luminescence. Timing (t4) 534 at which luminescence is expected to become flat is predetermined with a margin. Excluding the background 542 obtained at the same applied voltage, the signal is integrated with respect to time from timing (t4) 534 to timing (t5) 535. The resulting effective integration 543 is reported as a feature. Further, after the applied voltage is set to the high sensitivity side 514 at timing (t5) 535, the signal is integrated with respect to time excluding the background 541. The resulting effective integration 544 is reported as a feature. Of these features, the feature for which sensitivity-based analytical curve has a higher linearity part around the feature is used to calculate the concentration. Although the description so far assumes that the detection sensitivity is controlled time-sequentially only by changing the voltage applied to the photomultiplier tube 441, the same effect may also be obtained by time-sequentially switching the object of measurement. For example, wavelengths may be filtered selectively by the filter 450 or a filter may be selected alternately from a red filter for low sensitivity and a blue filter for high sensitivity. It is also possible to use a filter switching unit 451 to automatically set a filter 450 in combination with the sensitivity of the photomultiplier tube 441.

### [Embodiment 3]

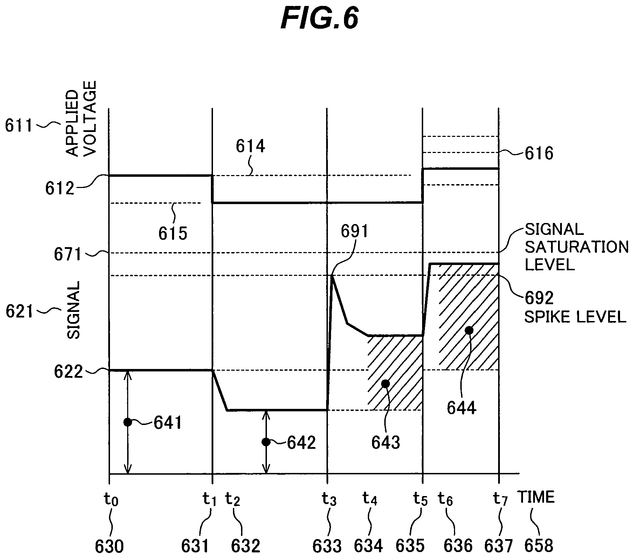

The following describes a case involving a spiking luminescent process with reference to Fig. 6. Its scheme is almost identical to Fig. 5. Important in this figure is that a spike 691 occurs. The main problem brought about by the spike is that if an instantaneous spiky luminescence 691 causes the signal to reach the signal saturation level 671, the subsequent signal level would become unstable, resulting in poor reproducibility. Accordingly, if the system involves a spiky luminescence, the initial spiky part of the luminescence is measured while the applied voltage is set for low sensitivity 615 so that the signal saturation level 671 is not reached even by the maximum luminescence. The peak spike level 692 is measured and used to predict the subsequent flat level signal quantity according to a predefined formula. The detection sensitivity 655 is determined from the predicted signal quantity. By using a feature 644 derived from the signal obtained at this sensitivity, a concentration is determined according to the corresponding analytical curve.

## Claims

1. An automatic analyzer, comprising:
a photomultiplier (441) for measuring luminescence intensity of an object of measurement (432);
sensitivity control means (401, 442, 443; 401, 451) for controlling the sensitivity of the photomultiplier (441);
memory means (401, 121) having stored therein plural sensitivity control values (514, 515) for the sensitivity control means (401, 442, 443; 401, 451), and analytical curves associated respectively with the plural sensitivity control values (514, 515) and used to calculate a concentration of an analyte in the object of measurement (432);
means (401) for choosing from the plural sensitivity control values (514, 515) stored in the memory means (401, 121) depending on the object of measurement (432), said choosing means (401) being adapted to switch between different sensitivity control values (514, 515) in a time-sequential manner; and
means (401) for obtaining photomultiplier signals (522) of the same object of measurement (432) at said different sensitivity control values (514, 515),
**characterized by**:
means (119) for integrating said photomultiplier signals (522), excluding a background signal value obtained at the same sensitivity control value, with respect to time to obtain a resulting effective integration (543, 544) as a feature for each of said sensitivity control values (514, 515); and
means (123) for calculating the concentration of the analyte by using the one of the obtained features (543, 544) for which the analytical curve associated with the respective sensitivity control value (514, 515) has a higher linearity part around the feature.

2. The analyzer of claim 1 wherein, the plural sensitivity control values (514, 515) stored in the memory means (401, 121) are associated with respective concentration ranges of the object of measurement (432).

3. The analyzer of claim 1 or 2, wherein
the choosing means (401) is adapted to choose plural sensitivity control values (514, 515) during a first period of time (t₀-t₃) before luminescence is initiated to obtain the background signal values (541, 542), and to choose the same plural sensitivity control values (514, 515) during a second period of time (t₃-t₇) after luminescence has been initiated; and
the automatic analyzer comprises means (401) adapted to exclude the background signal values (541, 542) obtained in the first period of time (t₀-t₃) from the photomultiplier signals measured in the second period of time (t₃-t₇).

4. The analyzer of claim 3, wherein the choosing means (401) is adapted to choose a second sensitivity control value (514) during the second period of time (t₃-t₇) after the photomultiplier signal obtained at a first sensitivity control value (515) during the second period of time (t₃-t₇) is expected to have become flat.

5. The analyzer of claim 4, wherein the choosing means (401) is adapted to choose the sensitivity of the first sensitivity control value (515) to be lower than the sensitivity of the second sensitivity control value (514).

## Patentansprüche

1. Automatisches Analysegerät mit
einem Photomultiplier (441) zum Messen der Lumineszenz-Intensität eines Messobjekts (432),
einer Empfindlichkeits-Steuereinrichtung (401, 442, 443; 401, 451) zum Steuern der Empfindlichkeit des Photomultipliers (441),
einer Speichereinrichtung (401, 121), auf der mehrere Empfindlichkeits-Steuerwerte (514, 515) für die Empfindlichkeits-Steuereinrichtung (401,442,443; 401, 451) und analytische Kurven gespeichert sind, die jeweils in Verbindung mit den mehreren Empfindlichkeits-Steuerwerten (514, 515) stehen und zum Berechnen einer Konzentration eines Analyts in dem Messobjekt (432) verwendet wird,
einer Einrichtung (401) zum Auswählen aus den mehreren in der Speichereinrichtung (401, 121) gespeicherten Empfindlichkeits-Steuerwerten (514, 515) in Abhängigkeit von dem Messobjekt (432), wobei die Auswähleinrichtung (401) dazu ausgelegt ist, zwischen verschiedenen Empfindlichkeits-Steuerwerten (514, 515) in einer Zeitabfolgeweise umzuschalten, und
einer Einrichtung (401) zum Erhalten von Photomultiplier-Signalen (522) des gleichen Messobjekts (432) mit den verschiedenen Empfindlichkeits-Steuerwerten (514, 515),
**gekennzeichnet durch**:
eine Einrichtung (119) zum Integrieren der Photomultiplier-Signale (522) unter Ausschluss eines mit dem gleichen Empfindlichkeits-Steuerwert erhaltenen Hintergrundsignalwerts über die Zeit, um eine resultierende effektive Integration (543, 544) als ein Merkmal für jeden der Empfindlichkeits-Steuerwerte (514, 515) zu erhalten, und
eine Einrichtung (123) zum Berechnen der Konzentration des Analyts, indem das eine der erhaltenen Merkmale (543, 544) verwendet wird, für das die mit dem zugehörigen Empfindlichkeits-Steuerwert (514, 515) in Verbindung stehende analytische Kurve einen größeren Linearanteil um das Merkmal aufweist.

2. Analysegerät nach Anspruch 1, wobei die mehreren in der Speichereinrichtung (401, 121) gespeicherten Empfindlichkeits-Steuerwerte (514, 515) mit zugehörigen Konzentrationsbereichen des Messobjekts (432) in Verbindung stehen.

3. Analysegerät nach Anspruch 1 oder 2, wobei
die Auswähleinrichtung (401) dazu ausgelegt ist, mehrere Empfindlichkeits-Steuerwerte (514, 515) während einer ersten Zeitspanne (t₀-t₃) auszuwählen, bevor Lumineszenz ausgelöst wird, um die Hintergrundsignalwerte (541, 542) zu erhalten, und die gleichen mehreren Empfindlichkeits-Steuerwerte (514, 515) während einer zweiten Zeitspanne (t₃-t₇) auszuwählen, nachdem die Lumineszenz ausgelöst wurde, und
das automatische Analysegerät eine Einrichtung (401) aufweist, die dazu ausgelegt ist, die während der ersten Zeitspanne (t₀-t₃) erhaltenen Hintergrundsignalwerte (541, 542) aus den in der zweiten Zeitspanne (t₃-t₇) gemessenen Photomultiplier-Signalen auszuschließen.

4. Analysegerät nach Anspruch 3, wobei die Auswähleinrichtung (401) dazu ausgelegt ist, einen zweiten Empfindlichkeits-Steuerwert (514) während der zweiten Zeitspanne (t₃-t₇) auszuwählen, nachdem das mit dem ersten Empfindlichkeits-Steuerwert (515) während der zweiten Zeitspanne (t₃-t₇) erhaltene Photomultiplier-Signal als flach erwartet wird.

5. Analysegerät nach Anspruch 4, wobei die Auswähleinrichtung (401) dazu ausgelegt ist, die Empfindlichkeit des ersten Empfindlichkeits-Steuerwerts (515) niedriger auszuwählen als die Empfindlichkeit des zweiten Empfindlichkeits-Steuerwerts (514).

## Revendications

1. Analyseur automatique, comprenant :
un photomultiplicateur (441) pour mesurer une intensité de luminescence d'un objet de mesure (432) ;
un moyen de commande de sensibilité (401, 442, 443; 401, 451) pour commander la sensibilité du photomultiplicateur (441) ;
un moyen de mémoire (401, 121) ayant, stockées dans celui-ci, des valeurs multiples de commande de sensibilité (514, 515) pour le moyen de commande de sensibilité (401, 442, 443; 401, 451), et des courbes analytiques associées respectivement avec les valeurs multiples de commande de sensibilité (514, 515) et utilisées pour calculer une concentration d'un analyte dans l'objet de mesure (432) ;
un moyen (401) pour choisir parmi les valeurs multiples de commande de sensibilité (514, 515) stockées dans le moyen de mémoire (401, 121) en fonction de l'objet de mesure (432), ledit moyen de choix (401) étant adapté à commuter entre différentes valeurs de commande de sensibilité (514, 515) d'une manière chronologique ; et
un moyen (401) pour obtenir des signaux (522) de photomultiplicateur du même objet de mesure (432) auxdites différentes valeurs de commande de sensibilité (514, 515),
**caractérisé par** :
un moyen (119) pour intégrer lesdits signaux (522) de photomultiplicateur, à l'exclusion d'une valeur de signal de fond obtenue à la même valeur de commande de sensibilité, par rapport au temps pour obtenir une intégration effective (543, 544) résultante comme une caractéristique pour chacune desdites valeurs de commande de sensibilité (514, 515) ; et
un moyen (123) pour calculer la concentration de l'analyte en utilisant celle des caractéristiques (543, 544) obtenues pour laquelle la courbe analytique associée avec la valeur de commande de sensibilité (514, 515) respective a une partie de linéarité supérieure autour de la caractéristique.

2. Analyseur selon la revendication 1, dans lequel les valeurs multiples de commande de sensibilité (514, 515) stockées dans le moyen de mémoire (401, 121) sont associées avec des plages respectives de concentration de l'objet de mesure (432).

3. Analyseur selon la revendication 1 ou 2, dans lequel
le moyen de choix (401) est adapté à choisir des valeurs multiples de commande de sensibilité (514, 515) lors d'une première période de temps (t₀-t₃) avant que la luminescence ne soit initiée pour obtenir les valeurs de signal de fond (541, 542) et à choisir les mêmes valeurs multiples de commande de sensibilité (514, 515) lors d'une deuxième période de temps (t₃-t₇) après que la luminescence a été initiée ; et
l'analyseur automatique comprend un moyen (401) adapté à exclure les valeurs de signal de fond (541, 542) obtenues lors de la première période de temps (t₀-t₃) des signaux de photomultiplicateur mesurés lors de la deuxième période de temps (t₃-t₇).

4. Analyseur selon la revendication 3, dans lequel le moyen de choix (401) est adapté à choisir une deuxième valeur de commande de sensibilité (514) lors de la deuxième période de temps (t₃-t₇) après que le signal de photomultiplicateur obtenu à une première valeur de commande de sensibilité (515) lors de la deuxième période de temps (t₃-t₇) est attendu être devenu plat.

5. Analyseur selon la revendication 4, dans lequel le moyen de choix (401) est adapté à choisir la sensibilité de la première valeur de commande de sensibilité (515) pour qu'elle soit inférieure à la sensibilité de la deuxième valeur de commande de sensibilité (514).
